# EUROPEAN PATENT APPLICATION

(11) **EP 0 867 739 A1**
(43) Date of publication of application: **30.09.1998**
(21) Application number: 98200876.5
(22) Date of filing: 20.03.1998
(51) Int. Cl.: G02B 6/44

(54) **Bobbin for optical fiber canisters and method of manufacturing it**

(30) Priority: 24.03.1997 IL 12051297
(71) Applicant: STATE OF ISRAEL - MINISTRY OF DEFENCE, Haifa 31021 (IL)
(72) Inventor: Moshonov, Aaron, Kiryat Motzkin 26419 (IL)
(74) Representative: Pezzoli, Ennio

(57) **Abstract**

An orthotropic bobbin for optical fibers is made of a composite material which comprises (I) continuous filaments having a high tensile strength and a low coefficient of thermal expansion; and (II) a polymeric matrix having a high coefficient of thermal expansion, wherein said polymeric matrix is the product of the curing of a matrix precursor composition comprising an epoxy resin, a hardener and a rubber modifier.

## Description

### Field of the Invention

The invention relates to bobbins constituting the support of optical fiber canisters, which permit the regular payout of the optical fiber and which maintain the optical fiber pack stable throughout a wide range of temperatures, e.g., from -50°C to +60°C; and to a method for making such bobbins.

### Background of the Invention

Optical fiber canisters are widely employed in communication applications, e.g., to transnmit information between a flying object, such as a missile, and a launching station, whether fixed or movable. During their use, the optical fibers are paid out from the canisters and this payout must take place regularly without snagging, breakages or other failures. Optical fiber canisters, however, are subjected to drastic temperature variations, which may go from several tens of degrees below zero to several tens of degrees above zero, e.g., from -50°C to +60°C. These temperature changes may produce displacements and irregularities in the optical fiber pack, which result in failure during payout of the optical fiber from the canister, or may even produce cracks throughout the optical fiber pack. These phenomena have been observed and discussed in the prior art, and it is understood that they derive from differences in coefficients of thermal expansion between the material constituting the bobbin and the optical fiber itself. An optical fiber, as is well known, is an orthotropic material, hawing a longitudinal coefficient of terminal expansion which is very nearly zero and a transverse coefficient of terminal expansions which is much larger and may reach and even may exceed 100×10⁻⁶cm/cm per °C. The material of which the bobbin is made may be isotropic or orthotropic. Metals, such as aluminum, are of course isotropic and their coefficients of expansion, therefore, cannot match those of the optical fiber in one or the other or both directions. To avoid failures due to the different expansion in different directions of the bobbin and the optical fiber pack, the art has suggested using an orthotropic material for making the bobbin itself, and this orthotropic material is usually a composite material. constituted with the intent to approach as far as possible in the longitudinal direction the coefficient of expansion of the optical fiber in the transverse direction and to have a very small coefficient of thermal expansion in the radial direction.

Various proposals have been made in the prior art. Thus it has been suggested to make the bobbin of a composite material constituted with the intent to approach as far as possible in the longitudinal direction the expansion of the optical fiber in the transverse direction and to limit the thermal expansion in the radial direction.

USP 5,205,510 discloses a bobbin which has a sleeve to support the fiber pack, with structural support means inside the sleeve to support it while allowing relative sliding parallel to the long axis of the sleeve. The support means has a coefficient of thermal expansion parallel to the long that is much smaller than that of the sleeve.

USP 5,181,270 discloses a frusto-conical bobbin for supporting an optical fiber pack, which is constructed of material having a coefficient of thermal expansion closely matching that of the optical fiber pack in a direction parallel to the longitudinal axis and which has a slot extending its entire length and completely through its wall. The slot allows the bobbin to expand and contract circumferentially at the same rate as the optical fiber pack expands and contracts in a circumferential direction.

JP 61201647 discloses a bobbin made of material having a coefficient of thermal expansion which is almost equal to that of the optical fiber to be wound thereupon.

JP 92053793 B discloses a bobbin of a fiber-reinforced plastic material in which the fibers are distributed to make the thermal expansion ratio in the axial direction lower than that in the circumferential direction.

USP 4,995,698 discloses an optical fiber canister which comprises a bobbin, on which the optical fiber is wound, which bobbin is made of a composite material formed of a fiber embedded in a matrix, wherein the fiber is preferably an inorganic fiber or Kevlar, and the polymer is an epoxy or phenolic polymer. Such bobbins, however, do not approximate closely enough the coefficients of thermal expansion of the fiber in the longitudinal and transverse direction, and particularly do not do so over a temperature range sufficiently broad to cover all the thermal conditions to which optical fiber canisters are commonly subjected.

It is therefore a purpose of this invention to provide a bobbin which is suitable for winding an optical fiber thereupon and which permits the payout of the fiber from the wound pack without failures, over the entire range of temperatures to which fiber optic canisters are usually subjected.

It is another purpose of this invention to provide a bobbin which has longitudinal and transverse coefficients of thermal expansion close to the transverse and longitudinal coefficients of optical fibers, respectively, over a temperature range from about -50°C to about +60°C.

It is a further purpose of this invention to provide such a bobbin which can be made by processes known in the art.

Other purposes and advantages of the invention will appear as the description proceeds.

### Summary of the Invention

The orthotropic bobbin according to the invention is made of a composite material which comprises (I) continuous filaments having a high tensile strength and a low or negative coefficient of thermal expansion and (II) a polymeric matrix having a high coefficient of thermal expansion, wherein said polymeric matrix which is the product of the curing of a matrix precursor composition comprising an epoxy resin, a hardener and a rubber modifier, and, preferably, an accelerator. In a preferred form of the invention, the rubber modifier is carboxyl terminated butadiene-acrylonitrile copolymer (hereinafter sometimes CTBN), available on the market under the trade name Hycar 1300 X13. manufactured and sold by Goodrich Chemical Co., and is employed in amounts of about from 9.5 to 9.7 % of the total weight of the bobbin (by "total weight" is meant the weight of the bobbin comprising the filaments and the fabric or tissue that is preferably inserted between successive filament layers, as will be explained hereinafter). All of the percentages in this specification and claims are by weight, unless otherwise specified. CTBN is a reactive liquid polymer, which, in the thermal curing of said composition, undergoes addition or esterification reactions with the epoxy resin.

The longitudinal or axial coefficient of thermal expansion (longitudinal or axial CTE) of the composite material of which the bobbin is made, according to the invention, is at least 87×10⁻⁶cm/cm/°C and may reach 90×10⁻⁶cm/cm/°C. By "longitudinal" or "axial" CTE, is meant the CTE in the direction of the axis of the bobbin. The transverse coefficient of expansion of said composite material - viz., the CTE is the direction that is tangential to the bobbin at the point considered, which is also approximately the longitudinal direction of the filaments - is at least -6.9×10⁻⁶cm/cm/°C. Since the transverse CTE is negative, because the filaments used according to the invention preferably have a negative longitudinal CTE, "at least" refers to the CTE's absolute value. viz., said CTE is equal to -|≥6.9|×10⁻⁶cm/cm/°C. The polymeric matrices for orthotropic bobbins disclosed in the prior art do not reach or even approach the above longitudinal coefficients of thermal expansion and generally do not exceed a CTE of 35×10⁻⁶cm/cm/°C. Examples of filaments that can preferably be used in the composite material of the bobbin according to the invention are glass, quartz, graphite, carbon or aramid. The counts of said filaments are very low, and therefore tows, viz. bundles of thousands of parallel filaments, are used to constitute, together with the polymeric matrix, the composite material of the bobbin. Preferably, tows or bundles of 5000 filaments are used, the total count of the tow being between 7890 and 8500 detex. Aramid filaments are manufactured and sold by DuPont de Nemours under the trademark Kevlar™ 49 and by Akzo Nobel under the trademark Twaron™ 1056. Preferred epoxy resin is Araldite LY-556 manufactured and sold by Ciba-Geigy. As hardener, HY-917, manufactured and sold by Ciba-Geigy, is preferably used. The preferred accelerator is DY-070, manufactured and sold by Ciba-Geigy. In view of the nature of the reaction between the epoxy resin and the rubber modifier, the skilled chemist will have no difficulty in finding other suitable hardeners and accelerators, if this is desired. Between the filaments there are preferably placed layers of fabrics, typically Polyester Surfacing Tissues manufactured and sold by Firet B.V., having a weight of 27 gr/m².

As has been said, a result of its composition, the orthotropic bobbin of the invention has a longitudinal or axial coefficient of thermal expansion between 87×10⁻⁶cm/cm/°C and 90×10⁻⁶cm/cm/°C and a transverse coefficient of thermal expansion of-6.9×10⁻⁶cm/cm/°C.

While in principle the bobbin could be manufactured by several prior art processes, provided that it is made of the composite material hereinbefore defined, it may be made by the process described in European Patent Application No. 0 627 380 A1, comprising the steps of:
a) providing a mold consisting of a male portion and of a female portion, the gap left between the said female and the said male portions, in their operational mounted position, being of the shape and dimensions of the bobbin which it is desired to produce, the said mold being provided with a resin inlet and vacuum port in communication with the said gap;
b) winding on the surface of the male part of the mold the continuous filaments which are to be comprised in the composite material;
c) inserting the male part of the mold into the female part thereof and securely connecting the said two parts, which are then essentially sealed against pressure loss along their contact surfaces;
d) causing the material (II) of the polymeric matrix to flow into the said gap through the resin inlet, while applying a vacuum at the vacuum port, until the empty space provided within the said gap is substantially entirely filled with said material;
e) allowing said material (II) to cure; and
f) opening the mold and removing the bobbin from the male part thereof.

Preferably,the filaments are wound in successive, superimposed layers, and a layer of polyester tissue is inserted between each two successive filament layers to improve the flow of the resin in the mold.

### Brief Description of the Drawings

In the drawings:
Fig. 1 schematically shows an axial cross-section of a bobbin according to an embodiment of the invention;
Fig. 2 schematically illustrates the winding of a tow of filaments on a winding mandrel;
Fig. 3A is a cross-section of a mold for making a bobbin according to an embodiment of the invention;
Fig. 3B is an enlargement of a detail of Fig. 3A; and
Fig. 4 schematically illustrates a whole injection system.

### Detailed Description of Preferred Embodiments

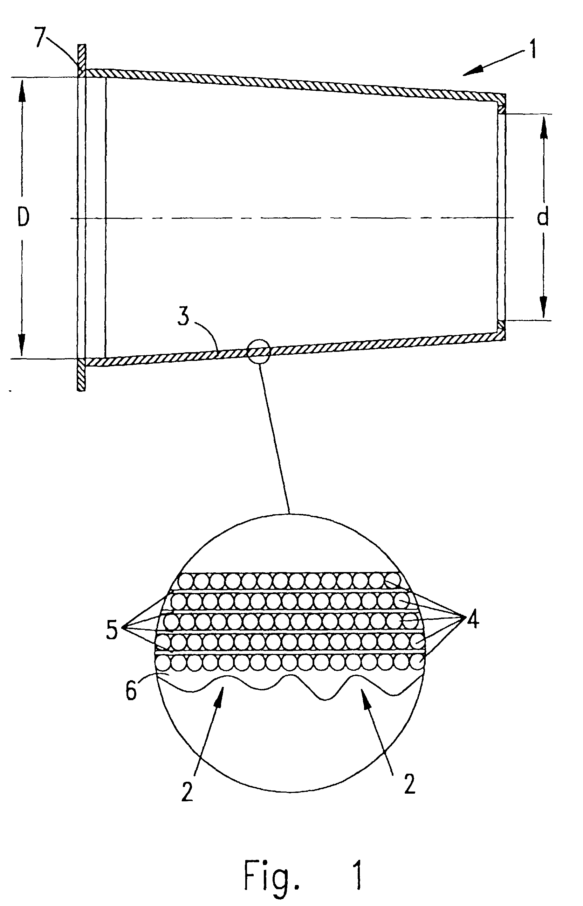

Fig. 1 schematically shows an axial cross-section of a bobbin suitable for use with an optical fiber. The bobbin, generally indicated by numeral 1, is frusto-conical in shape, and has a large inner diameter, D, and a small inner diameter, d. The wall 3 of the bobbin has an outer surface on which grooves 2 have been made, as seen in the enlarged portion of the figure. Numeral 4 indicates five layers of continuous fibers. Between them are four layers of polyester tissues indicated by numeral 5. A layer 6 of cured epoxy covers the outer fiber layer. A disk 7 is connected at diameter D, which disk is used as a flange for connecting the canister to its housing. Of course, other shapes of flanges can also be used. The optical fiber pack is not a part of this invention and may have any desired geometrical structure.

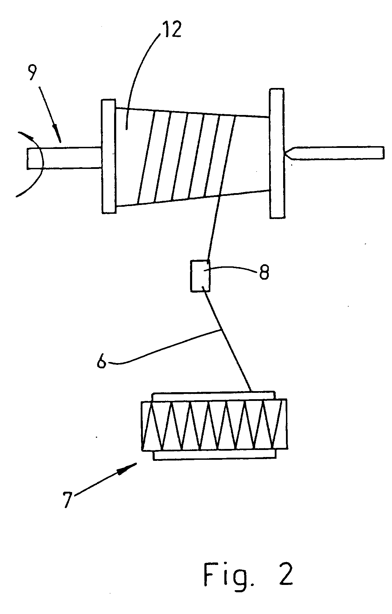

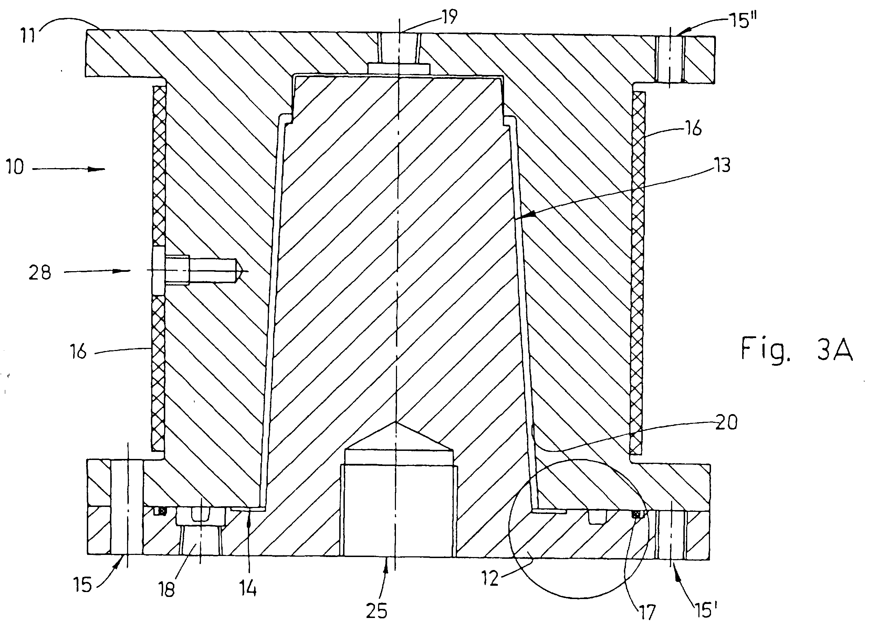

In order to manufacture a bobbin according to an embodiment of the invention, the following process is preferably carried out, although other known processes might alternatively be used. As shown in Fig. 3A, a mold 10 is provided, which is comprised of a female part 11 and a male part or core 12, made of any suitable metal material. Mold 10 is designed so as to leave between said female and said core a gap 13, which essentially corresponds to the size and shape of the bobbin which it is desired to produce. Additionally, in this embodiment of the process, a gap 14 is also provided, for the purpose of creating anchoring means integral with the bobbin, as will be more fully explained hereinafter. Core 12 is used as a winding mandrel, as illustrated in Fig. 2. A tow of continuous filaments 6, preferably chosen from among the filaments mentioned hereinbefore, is wound from a spool 7 onto winding mandrel 12. The winding is effected under the control of a filament payout mechanism, schematically indicated by 8 in the figure. The filament tow is wound under controlled tension on core 12 by the rotation of shaft 9 in the direction of the arrow. Core 12, with the filament winding thus produced, is removed from shaft 9 and inserted into the mold. The filament tow in wound in successive superimposed layers, and a surface tissue is preferably inserted, in any convenient way, between adjacent layers.

The polymeric matrix precursor composition, according to the invention, is then injection molded into the mold. During the process the female and male parts of the mold are kept together by any suitable means, e.g., by bolts (not seen in the drawings) passing through openings 15 - 15'', or by any other conventional means. Heating elements can be provided at any suitable location, e.g., within the core 12 or around the outer wall of the female mold part 11. In the embodiment of Fig. 3A, electrical heating elements 16 are provided around the female mold part. Other conventional heating methods can also be used. Temperatures can be measured by a suitable probe inserted in well 28. Opening 25 is provided to serve as a seat for shaft 9 during the filament winding stage.

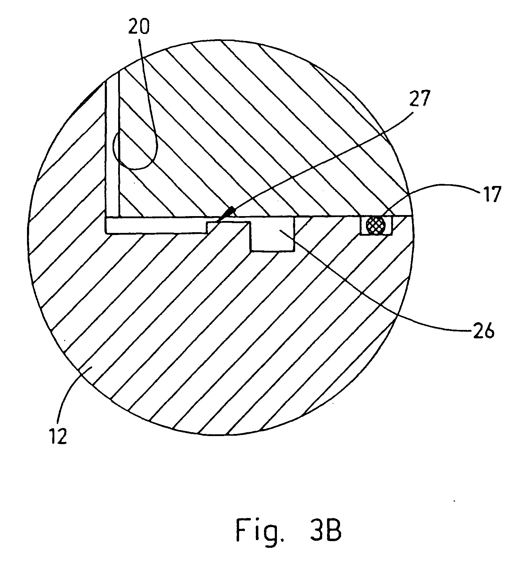

Fig. 3B is an enlarged view of the circled portion of the mold of Fig. 3A. From this enlargement it is possible to see the channel 26 in which the resin flows around the core, after its injection into inlet port 18 (Fig. 3A). From channel 26 the resin flows into restricted channel 27 and then into gap 20 within the mold.

Vacuum is maintained within the mold during the molding operation by appropriate sealing means, e.g., by gasket 17 provided at the interface between the two parts of the mold. The matrix precursor composition is caused to flow into the mold through inlet 18, by the action of positive pressure as well as by applying a vacuum to vacuum port 19. Heat is applied, e.g., by jacket 16, both to aid flow of the composition through empty space 13 and to promote its curing to the final polymeric matrix. Once the whole empty volume within gap 13 is filled with matrix precursor composition, inlet 18 and outlet 19 are closed and said material is cured and allowed to solidify, to form, together with the filaments and the tissues, if any, the body of the bobbin. The male and female parts of the mold are separated, and the bobbin is removed from the said male part. This may require subjecting the mold, or at least the female part thereof, to heating/cooling cycles, in order to provide temporary differences in expansion of the various materials which allow for an easier separation. The inner surface 20 of female mold part 11 is preferably grooved, and consequently any surface created against it will also be grooved. Thus the core 12 can be screwed out of the female mold part 11. However, any other arrangement, such as two-parts molds, inner separable sleeve, or the like, which permit to separate the bobbin from the mold, is acceptable. Many different methods will be apparent to the skilled person, and therefore are not discussed here for the sake of brevity.

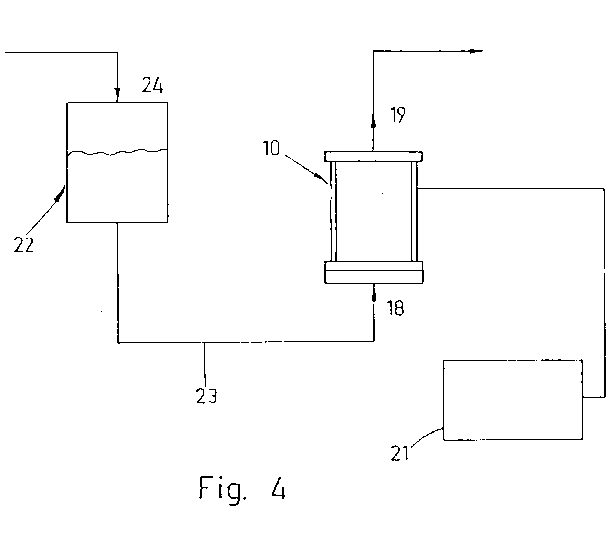

Fig. 4 schematically illustrates a whole injection system. The mold 10 of Fig. 3 is connected to a vacuum line 19 on one side, and to feed inlet 18 on the other. A temperature controller 21 ensures that the desired temperature is maintained. A reservoir 22 of matrix precursr composition is connected to inlet 18 of mold 10 through line 23. Flow of the composition through line 23 is obtained, e.g., by applying an air pressure on the surface of said composition within reservoir 22, through air pressure inlet 24. Alternatively, of course, said compositionl can be injected by using a pump or a piston or other displacement device (not shown).

The following examples illustrate the components, viz. the precursor compositions and the filaments and tissues, of two compositematerials from which orthotropic bobbin according to the invention were made. The precursor compositions were cured at 80°C for 2 hours and then at 120°C for 12 hours.

### Example 1

The fibers, the components of the polymeric matrix precursor composition and the polyester tissue used in this Example are given by the following Table I

**Table I**

| **(%W)** | **Manufacturer** | **Component** |
|---|---|---|
| 50.0 | DuPont | Kevlar 49, Denier 7100, Type 968 |
| 18.9 | CIBA-GEIGY | Araldite LY-556 |
| 17.0 | CIBA-GEIGY | Hardener HY-917 |
| 0.1 | CIBA-GEIGY | Accelerator DY-070 |
| 9.5 | Goodrich Chemical | Hycar CTBN (1300 x 13) |
| 4.5 | Firet BV | Polyester Surfacing Tissues, weight: 27 gr/m² |

The coefficients of thermal expansion of two typical bobbins are given in the following Tables II and III..

**Table II**

| **Temp (°C)** | **Longitudinal CTE x 10**^{**6**}**cm/cm x °C** | **Transverse CTE x 10**^{**6**}**cm/cm x °C** |
|---|---|---|
| 48.9 | 87.0 | -7.1 |
| 58.9 | 88.5 | -7.1 |
| 72.2 | 89.8 | -7.2 |

**Table III**

| **Temp (°C)** | **Longitudinal CTE x 10**^{**6**} **cm/cm x °C** | **Transverse CTE x 10**^{**6**} **cm/cm x °C** |
|---|---|---|
| 49.3 | 86.6 | -7.2 |
| 61.3 | 87.6 | -7.2 |
| 72.9 | 88.0 | -7.3 |

### Example 2

The fibers, the components of the polymeric matrix precursor composition and the polyester tissue used in this Example are given by the following Table IV.

**Table IV**

| **(%W)** | **Manufacturer** | **Component** |
|---|---|---|
| 48.6 | Akzo - Nobel | Twaron 1056, Drex: 8500, Filaments: 5000 |
| 19.5 | CIBA-GEIGY | Araldite LY-556 |
| 17.5 | CIBA-GEIGY | Hardener HY-917 |
| 0.1 | CIBA-GEIGY | Accelerator DY-070 |
| 9.7 | Goodrich Chemical | Hycar CTBN (1300 x 13) |
| 4.6 | Firet BV | Polyester Surfacing Tissues, weight: 27·gr/m² |

The coefficients of thermal expansion of a typical bobbin are given in the following Table V.

**Table V**

| **Temp (°C)** | **Longitudinal CTE x10**^{**6**} **cm/cm x °C** | **Transverse CTE x10**^{**6**} **cm/cm x °C** |
|---|---|---|
| 48.6 | 88.5 | -6.9 |
| 61.2 | 89.1 | -6.9 |
| 72.7 | 90.2 | -7.1 |

While examples of the invention have been given by way of illustration, it will be apparent that many modifications, variations and adaptations may be made therein by persons skilled in the art, without departing from the spirit of the invention or exceeding the scope of the claims.

## Claims

1. Orthotropic bobbin for optical fibers, made of a composite material which comprises (I) continuous filaments having a high tensile strength and a low coefficient of thermal expansion; and (II) a polymeric matrix having a high coefficient of thermal expansion, wherein said polymeric matrix is the product of the curing of a matrix precursor composition comprising an epoxy resin, a hardener and a rubber modifier.

2. Orthotropic bobbin according to claim 1, wherein the rubber modifier is a carboxyl terminated butadiene-acrylonitrile and the matrix precursor composition comprises an accelerator.

3. Orthotropic bobbin according to claim 2, wherein the carboxyl terminated butadiene-acrylonitrile is present in the matrix precursor in amounts of from 9.5 to 9.7 % by weight of the total weight of the bobbin, including the fibers and the fabric.

4. Orthotropic bobbin according to claim 1, wherein the polymeric matrix has an axial coefficient of thermal expansion of at least 87×10⁻⁶cm/cm/°C

5. Orthotropic bobbin according to claim 1, wherein the polymeric matrix has a transverse coefficient of thermal expansion not higher than-6×10⁻⁶cm/cm/°C.

6. Orthotropic bobbin according to claim 1, wherein the filaments are chosen from among glass, quartz, graphite, carbon or aramid filaments.

7. Orthotropic bobbin according to claim 1, wherein the epoxy resin is Araldite LY-556 ex Ciba-Geigy.

8. Orthotropic bobbin according to claim 1, wherein the hardener is HY-917 ex Ciba-Geigy.

9. Orthotropic bobbin according to claim 2, wherein the accelerator is DY-070 ex Ciba-Geigy.

10. Orthotropic bobbin according to claim 1, wherein the filaments are arranged in superimposed layers, further comprising polyester tissue interposed between successive said layers.

11. Orthotropic bobbin according to claim 1, wherein the continuous filaments are grouped in bundles of parallel filaments.

12. Orthotropic bobbin according to claim 1, wherein the bundles of parallel filaments comprise about 5000 filaments and have a total count of about between 7890 and 8500 detex.

13. Orthotropic bobbin according to claim 1, wherein the polyester tissue is Firet BV having a weight of 27 gr/m².

14. Orthotropic bobbin according to claim 1, having an axial coefficient of thermal expansion of at least 87×10⁻⁶cm/cm/°C and a transverse coefficient of thermal expansion not higher than -6×10⁻⁶cm/cm/°C.

15. Process for the manufacture of an orthotropic bobbin according to claim 1, comprising the steps of:
a) providing a mold consisting of a male portion and of a female portion, the gap left between the said female and the said male portions, in their operational mounted position, being of the shape and dimensions of the bobbin which it is desired to produce, the said mold being provided with an inlet fr the material to be molded and a vacuum port in communication with the said gap;
b) winding on the surface of the male part of the mold the continuous filaments which are to be comprised in the composite material of the bobbin;
c) inserting the male part of the mold into the female part thereof and securely connecting the said two parts, whereby to seal them essentially against pressure loss along their contact surfaces;
d) causing the material of the polymeric matrix to flow into the said gap through said inlet, while applying a vacuum at the vacuum port, until the empty space provided within the said gap is substantially entirely filled with said material;
e) allowing said material to cure; and
f) opening the mold and removing the bobbin from the male part thereof.

16. Process according to claim 15, further comprising disposing the filaments in superimposed layers and interposed a layer of polyester tissue between each of said layers and the successive layer.

17. Process accordibg to claim 15, wherein the layers of filaments are in the number of five.

18. Composite material which comprises (I) continuous filaments having high tensile strength and a low coefficient of thermal expansion; and (II) a polymeric matrix having a high coefficient of thermal expansion, wherein said polymeric matrix is the product of the curing of a matrix precursor composition comprising of an epoxy resin, a hardener and a rubber modifier, for use in the manufacture of orthotropic bobbins for optical fibers.
